# EUROPÄISCHE PATENTSCHRIFT

(11) **EP 1 817 208 B1**
(45) Veröffentlichungstag und Bekanntmachung des Hinweises auf die Patenterteilung: **01.03.2017**
(21) Anmeldenummer: 05784573.7
(22) Anmeldetag: 09.09.2005
(51) Int. Cl.: B60R 21/01

(54) **INTEGRIERTER SCHALTKREIS**
INTEGRATED CIRCUIT
CIRCUIT INTEGRE

(30) Priorität: 23.11.2004 DE 102004056415
(43) Veröffentlichungstag der Anmeldung: 15.08.2007
(73) Patentinhaber: ROBERT BOSCH GMBH, 70442 Stuttgart (DE)
(72) Erfinder: SCHUMACHER, Hartmut, 71691 Freiberg (DE); ROOS, Bernd, 74223 Flein (DE); KARNER, Ruediger, 70806 Kornwestheim (DE); JOUSSE, Alain, 70192 Stuttgart (DE)
(86) Internationale Anmeldenummer: PCT/EP2005/054483
(87) Internationale Veröffentlichungsnummer: WO 2006/056496

(56) Entgegenhaltungen:
- DE-C1- 19 825 817
- US-A1- 2003 155 753
- US-B1- 6 191 949
- US-B1- 6 249 228
- US-B1- 6 530 597

## Beschreibung

### Stand der Technik

Die Erfindung geht aus von einem integrierten Schaltkreis nach der Gattung des unabhängigen Patentanspruchs.

Aus DE 100 57 915 C2 ist beispielsweise ein Steuergerät zur Ansteuerung von Personenschutzmitteln bekannt, bei dem ein Prozessor vorliegt und parallel dazu ein Sicherheits-IC, der unabhängig vom Prozessor Sensorwerte überwacht. Des weiteren ist ein Zündkreisbaustein vorgesehen, mit Zündendstufen, um das Zündelement anzusteuern.

Aus US 2003/0155753 A1 ist es bekannt, verschiedene Komponenten eines Airbagsteuergeräts auf einem ASIC zu vereinigen. Weiterhin kann ein neuronaler Computer als ein solcher ASIC ausgeführt sein.

### Vorteile der Erfindung

Der erfindungsgemäße integrierte Schaltkreis mit einem Gehäuse in einem Steuergerät mit den Merkmalen des unabhängigen Patentanspruchs hat demgegenüber den Vorteil, dass nunmehr verschiedene Funktionen in einem einzigen Baustein innerhalb eines Gehäuses angeordnet sind. Zu diesen Funktionen gehört die Energieversorgung, ein Watchdog zur Überwachung des Prozessors des Steuergeräts, eine Funktion zur unabhängigen Überwachung der Sensorwerte, um in Abhängigkeit davon die Zündendstufen freizugeben und Schnittstellen, um zumindest außerhalb des Steuergeräts angeordnete Sensoren anzubinden. Dieser integrierte Baustein stellt daher eine sehr kompakte, kostengünstige und zuverlässige Lösung dar, um diese Funktionen alle in einem Baustein zu integrieren. Damit werden die Elektronikstoffkosten und der Leiterplattenflächenbedarf reduziert. Durch die Reduzierung der benötigten Bauelemente bezüglich der Anzahl ist auch eine Verminderung der gesamten Ausfallrate des Steuergeräts zu erwarten.

Durch die in den abhängigen Ansprüchen aufgeführten Maßnahmen und Weiterbildungen sind vorteilhafte Verbesserungen des im unabhängigen Patentanspruch angegebenen integrierten Schaltkreises möglich.

Besonders vorteilhaft ist, dass der integrierte Schaltkreis zusätzlich eine weitere Schnittstelle zur Kommunikation mit Sensoren oder anderen Steuergeräten aufweist. Diese Schnittstelle kann beispielsweise als CAN-Busschnittstelle oder als K-Line ausgebildet sein.

Es ist insbesondere vorteilhaft, dass der Watchdog dreistufig ausgeführt ist. Der dreistufige Watchdog führt eine Systemtaktüberwachung durch, er überwacht die korrekte Abfolge von systemrelevanten Softwarebasisfunktionen und er überwacht sogenannte Build-In-Selftests von Systemkomponenten, wie es beispielsweise Speicherbausteine oder andere prozessorinterne Komponenten sind.

Darüber hinaus ist es von Vorteil, dass die Spannungsversorgung zusätzlich die Funktion aufweist, eine Energiereserve des Steuergeräts, die für die Autarkiezeit notwendig ist, aufzuladen.

Die Spannungsversorgung weist weiterhin einen Gleichspannungsumsetzer für eine erhöhte Spannung für die Energiereserve, einen Abwärtsumsetzer für eine 6,7V-Spannungsversorgung und Bausteine für die 5V- und 3,3V-Versorgung auf. Hier werden vorzugsweise sogenannte linearen Spannungsregulatoren verwendet.

Darüber hinaus weist der erfindungsgemäße integrierte Schaltkreis vorteilhafter Weise zusätzlich eine Resetverwaltung auf. Hierbei werden bei Über- bzw. Unterspannung, bei einem Watchdogfehler und zur Resetierung der Logik des Prozessors des Steuergeräts, bspw. ein Mikrokontroller, ein Reset erzeugt.

Schließlich ist es auch von Vorteil, dass der erfindungsgemäße integrierte Schaltkreis auch die Zündendstufen beinhaltet. Damit kann mit einem einzigen integrierten Schaltkreis eine Vielzahl von Bauelementen angeboten werden.

### Zeichnung

Ausführungsbeispiele der Erfindung sind in der Zeichnung dargestellt und werden in der nachfolgenden Beschreibung näher erläutert.

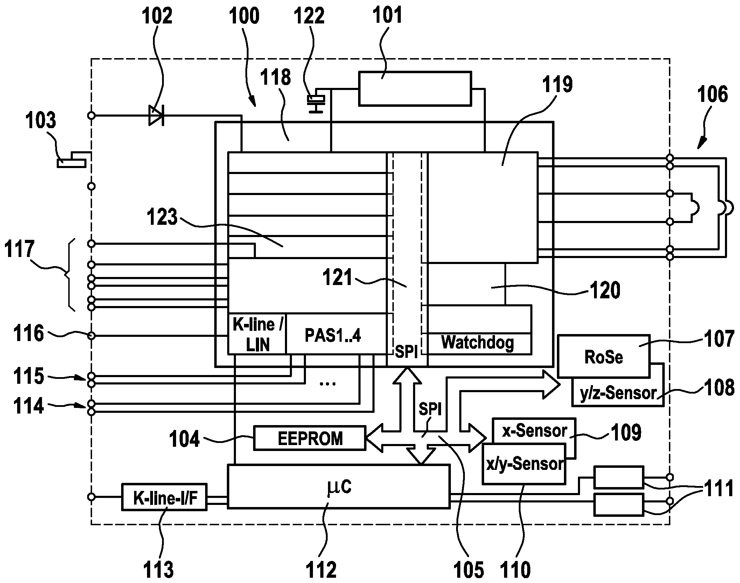

Es zeigt
- Figur 1: ein Blockschaltbild eines Steuergeräts mit dem erfindungsgemäßen integrierten Schaltkreis.

### Beschreibung

Die elektronischen und in Software realisierten Funktionen eines Steuergeräts zur Ansteuerung von Personenschutzmitteln wie Airbags, Gurtstraffern oder Fußgängerschutzmitteln werden zunehmend intelligenter. Dafür werden verschiedene Bausteine angeboten. Allerdings sind die Kosten in der Automobilelektronik ein wichtiger Faktor, so dass hier eine Kostenreduzierung notwendig ist.

Erfindungsgemäß werden daher folgende Funktionen in einen einzigen integrierten Schaltkreis zusammengefasst:
Die Energieversorgung, eine Sicherheitsfunktion und Schnittstellen. Zusätzlich können auch die Zündendstufen in den integrierten Schaltkreis integriert werden. Die Sicherheitsfunktion umfasst einen Watchdog für den im Steuergerät befindlichen Prozessor, vorzugsweise einen Mikrocontroller und eine vom Mikrocontroller unabhängige Bewertung der Beschleunigungssignale. Damit ist der aus dem Stand der Technik bekannte Sicherheitshalbleiter gemeint. Zu den Funktionen gehören auch Schnittstellen, wie solche zu den externen Sensoren und auch andere Kommunikationsschnittstellen, wie die K-Line oder CAN. Zu den Sensoren sind beispielsweise die bekannten unidirektionalen Anschlüsse möglich, ein Bus-Interface und dabei insbesondere das LIN-Interface.

Figur 1 erläutert in einem Blockschaltbild den erfindungsgemäßen integrierten Schaltkreis, der in einem Steuergerät angeordnet ist. Durch die gestrichelte Linie wird das Steuergerät angedeutet. Innerhalb des Steuergeräts befindet sich der integrierte Schaltkreis 100, an den mit ihrer Kathode eine Diode 102 angeschlossen ist. Dieser Anschluss der Kathode der Diode 102 führt zu einem Block 118 im Schaltkreis 100, der für die Energieversorgung zuständig ist. Dieser Block 118 führt folgende Funktionen aus: er hat einen Auf- bzw. Abwärtswandler für die Energiereserve, er hat einen Spannungswandler, um aus den vorhandenen 5 Volt 3,3 Volt zu erzielen und für diese 3,3 Volt eine Spannungsregelung.

Darüber hinaus weist der Block 118 eine Resetfunktion auf, um das Steuergerät, beispielsweise in einem Fehlerfall, neu zu starten. Der Block 118 ist weiterhin mit einer Regelung 101 verbunden, an die gegen Masse die Energiereserve 122 als ein Kondensator angeschlossen ist. Der Baustein 101 sorgt einerseits für die Aufladung der Energiereserve 122 und im Auslösefall für die Zuführung der im Kondensator 122 gespeicherten Energie zu einem Block 119, der die Zündstufen repräsentiert. Üblicherweise wird der Zündstrom immer aus der Energiereserve 122 gewonnen. Es ist alternativ möglich, die Zündendstufen 119 außerhalb des Bausteins 100 vorzusehen. Aber auch intern wird der Block 119 mit Energie aus dem Block 118 versorgt, um beispielsweise die im Block 119 vorgesehene Logik zu betreiben.

Intern ist zwischen den Blöcken 119 und 118, 123 und 120 ein SPI (Serial Peripherial Interface) vorgesehen, das die Datenkommunikation über diesen Bus ermöglicht. An diesen Bus SPI 121 ist auch außerhalb des Bausteins 100 ein SPI-Bus 105 angeschlossen. An diesen Bus 105 ist nicht nur ein Speicher 104, der hier als EEPROM ausgestaltet ist, sondern auch der Mikrocontroller 112 und Sensoren 107 bis 110 angeschlossen. Innerhalb des integrierten Schaltkreises 100 führt der Block 120 die Sicherheitsfunktionen aus, zu denen die parallele Auswertung der Sensorsignale der Sensoren 107 bis 110 gehört, wobei diese Auswertung parallel zu der des Mikrocontrollers 112 geschieht und die Watchdogfunktion, die insbesondere den Mikrokontroller 112 in seiner Funktion überwacht. Diese Funktionen werden alle über den SPI-Bus 121 und 105 ausgeführt. Der Watchdog führt insbesondere die Systemtaktüberwachung, die Überwachung der korrekten Abfolge der systemrelevanten Softwarebasisfunktionen und die Überwachung von Build-In-Selftests von Systemkomponenten, wie es beispielsweise Speicherbausteine 104 sind, durch. Der Watchdog kann also als ein 3-fach-Watch-Dog ausgebildet sein, da er hier drei Funktionen parallel ausführt. Der Block 123 stellt die Schnittstellenfunktionen des integrierten Schaltkreises 100 dar. Der Block 123 ist daher über die Ein-/Ausgänge 117 mit der Außenwelt des Steuergeräts verbunden. Insbesondere ist der Block 123 über ein K-Line- oder LIN-Interface über den Ein-/Ausgang 116 mit der Außenwelt beispielsweise mit Gewichtssensoren an einem Fahrzeugsitz verbunden. Über die Ein-/Ausgänge 115 ist der Block 123 mit extern angeschlossenen Beschleunigungssensoren, die sich beispielsweise in der Fahrzeugseite und/oder der Fahrzeugfront als Upfrontsensoren befinden, verbunden. Sensorsignale dieser externen Sensoren werden durch den Safetycontroller des Blocks 120 parallel zum Mikrocontroller 112 ausgewertet, um festzustellen, ob es sich tatsächlich um einen Auslösefall handelt.

Der Mikrocontroller µC bestimmt nämlich auf Grund der Sensordaten der Sensoren 107 bis 110 und der externen Sensoren, die ihre Daten über die Eingänge 115 und 114 an den Block 100 liefern aus, um zu entscheiden, ob die Auslösung von Rückhaltemitteln notwendig ist. Da ein Mikrocontroller wie der Mikrocontroller 112 unter Umständen Fehlfunktionen aufweisen kann und es niemals zu einer Fehlauslösung kommen darf, ist es notwendig, hier eine redundante Auswertung vorzusehen, die durch den Block 120 realisiert ist. Dabei ist diese Auswertung des Blockes 120 weniger detailliert als die, die der Prozessor 112 selbst durchführt. Im Speicher 104, der wie gesagt als EEPROM ausgebildet ist, werden Daten, die für eine Post-Crash-Analyse notwendig sind, abgespeichert. Dazu gehören beispielsweise Fehler und Betriebskennwerte, wie die gemessenen Beschleunigungen, die zu einer Auslösung geführt haben, Auslösezeitpunkte, Uhrzeiten, u.s.w.. Wie in Figur 1 dargestellt, ist der Block 107 als Rollratensensor ausgebildet, während der Sensor 108 Beschleunigungen in Y- und Z-Richtungen sensiert. Dabei bedeutet Y eine Seitenrichtung des Fahrzeugs und Z eine Vertikalrichtung des Fahrzeugs. Die X-Richtung, die beispielsweise durch den Sensor 109 erfasst wird, erfasst Beschleunigungen in Fahrzeuglängsrichtung. Zusätzlich ist noch ein X-Y-Sensor 110 vorgesehen, der also Beschleunigungen in Fahrzeuglängsrichtung und Fahrzeugquerrichtung erfasst. Winklige Anordnungen der Beschleunigungssensoren sind natürlich möglich. Der Prozessor 112 ist über einen Interfacebaustein 113 über die sogenannte K-Line beispielsweise mit anderen Steuergeräten verbunden. K-Line ist ein feststehender Begriff und steht für Kommunikations-Leitung. Über einen Ausgang ist der Prozessor 112 mit zwei Treibern 111 verbunden. Die Treiber 111 sind als Low-side-Schalter, bspw. für die Ein-/Ausschaltung einer Lampe und die Erzeugung eines digitalen Signals, als ein Pull-up beim Empfänger des Signals konfiguriert.

Die Funktion des Steuergeräts mit dem erfindungsgemäßen Baustein 100 ist die Folgende. Über die Diode 102 und den Block 118 wird der Energiereservekondensator 122 unter Ausnutzung des Bausteins 100 aufgeladen. Darüber hinaus stellt der Block 118 die Betriebsspannungen für das Steuergerät zur Verfügung. Zu diesen Betriebsspannungen gehören die 5 Volt und auch die 3,3 Volt, die reguliert angeboten werden. Von den Sensoren 107 bis 110 und den externen Sensoren über die Eingänge 114 und 115 erhält das Steuergerät Sensorwerte, um zu erkennen, ob ein Crash vorliegt. Die Auswertung der Sensorwerte erfolgt durch den Prozessor 112. Dabei werden üblicher Weise die Beschleunigungssignale geglättet oder integriert und mit variablen oder festen Schwellen verglichen. Parallel dazu überwacht auch der Block 120 mit einem Safety-Controller diese Sensorwerte über beispielsweise feste Schwellen, ob tatsächlich ein Auslösefall vorkommen kann. Diese Redundanz sorgt dafür, dass Fehlfunktionen des Mikrocontrollers 112 erkannt werden. Solche Fehlfunktionen werden jedoch auch durch eine Watchdogfunktionalität des Blockes 120 kontinuierlich überwacht. Zu diesen Watchdogfunktionen zählt neben der Systemtaktüberwachung auch die Überwachung der Softwarebasisfunktionen des Mikrocontrollers 112 beispielsweise, indem dem Mikrocontroller bestimmte Fragen gestellt werden, um anhand der Ergebnisse festzustellen, ob der Mikrocontroller noch in der Lage ist, diese Fragen richtig zu beantworten. Eine weitere Funktion des Watchdogs ist die Überwachungen von Build-In-Selftests von Systemkomponenten, wie beispielsweise Speicherbausteine oder anderen prozessorinternen Komponenten. Der Block 123 sorgt also für die Zuführung von externen Sensorendaten, aber auch andere externe Daten können über die Ein-/Ausgänge 117 erfasst werden.

Wird ein Auslösefall durch den Mikrocontroller 112 festgestellt und durch den Baustein 120 verifiziert, werden die Endstufen 119 durch den Safety-Controller 120 entriegelt und der Feuerbefehl wird vom Prozessor 112 über die SPI-Leitung 105 und 121 an die Endstufen 119 übertragen, so dass diese dann durchschalten. Dies bewirkt, dass die Energie, die in der Energiereserve 122 gespeichert ist, über den Block 101 den Endstufen zugeführt wird, die die Energie dann an die Zündelemente 106 zuführen, so dass die Zündelemente gezündet werden. Damit kommt es zur Auslösung der Rückhaltemittel.

Neben den hier dargestellten Komponenten können noch weitere Komponenten im Steuergerät angeordnet sein.

## Patentansprüche

1. Integrierter Schaltkreis (100) mit einem Gehäuse in einem Steuergerät, mit einer ersten Auswertung von wenigstens einem Beschleunigungssignal zur Freigabe von wenigstens einer Zündendstufe, **dadurch gekennzeichnet, dass** der integrierte Schaltkreis (100) derart konfiguriert ist, dass der integrierte Schaltkreis (100) wenigstens zwei Spannungspegel bereitstellt, einen Watchdog (120) zur Überwachung eines Prozessors (112) und mehrere Blöcke (118, 119, 120, 123) aufweist,
dass zwischen der Blöcken (118 119, 120, 123) des integrierten Schaltkreises (100) ein erster Serial Peripherial Interface-Bus (121) vorgesehen ist, der eine Datenkommunikation über diesen ersten Bus (121) ermöglicht, wobei ein zweiter Serial Peripherial Interface-Bus (105) an den ersten Serial Peripherial Interface-Bus (121) angeschlossen ist, wobei ein erster der Blöcke (118) eine Resetfunktion aufweist, um das Steuergerät neu zu starten, wobei ein zweiter der Blöcke (119) wenigstens eine Zündendstufe aufweist, wobei ein dritter der Blöcke (120) Sicherheitsfunktionen ausführt, zu der der Watchdog und die erste Auswertung des wenigstens einen Beschleunigungssignals parallel zu einer zweiten Auswertung eines Mikrocontrollers (112) gehören, und wobei ein vierter der Blöcke (123) Schnittstellenfunktionen des integrierten Schaltkreises (100) darstellt.

2. Integrierter Schaltkreis nach Patentanspruch 1, **dadurch gekennzeichnet, dass** der Watchdog (120) dreistufig ausgebildet ist.

3. Integrierter Schaltkreis nach einem der vorherigen Ansprüche, **dadurch gekennzeichnet, dass** der integrierte Schaltkreis derart konfiguriert ist, dass er eine Aufladung einer Energiereserve (122) bewirkt.

## Claims

1. Integrated circuit (100) with a housing in a control device, with a first evaluation of at least one acceleration signal for enabling at least one final firing stage, **characterized in that** the integrated circuit (100) is configured in such a way that the integrated circuit (100) provides at least two voltage levels, comprises a watchdog (120) for monitoring a processor (112) and a number of blocks (118, 119, 120, 123), **in that** a first serial peripheral interface bus (121) is provided between the blocks (118, 119, 120, 123) of the integrated circuit (100), allowing data communication via this first bus (121), a second serial peripheral interface bus (105) being connected to the first serial peripheral interface bus (121), a first of the blocks (118) having a reset function in order to restart the control device, a second of the blocks (119) having at least one final firing stage, a third of the blocks (120) performing safety functions, which include the watchdog and the first evaluation of the at least one acceleration signal parallel to a second evaluation of a microcontroller (112), and a fourth of the blocks (123) representing interface functions of the integrated circuit (100).

2. Integrated circuit according to Patent Claim 1, **characterized in that** the watchdog (120) is of a three-stage form.

3. Integrated circuit according to one of the preceding claims, **characterized in that** the integrated circuit is configured in such a way that it implements charging of an energy reserve (122).

## Revendications

1. Circuit intégré (100) comportant un boîtier dans un appareil de commande, comportant un premier dispositif d'évaluation d'au moins un signal d'accélération destiné à déclencher au moins un étage final d'allumage, **caractérisé en ce que** le circuit intégré (100) est configuré de manière à ce que le circuit intégré (100) fournisse au moins deux niveaux de tension, à ce qu'il comporte un dispositif de surveillance (120) destiné à surveiller un processeur (112) et plusieurs blocs (118, 119, 120, 123), **en ce qu'**il est prévu entre les blocs (118, 119, 120, 123) du circuit intégré (100) un bus d'interface périphérique série (121) qui permet une communication de données par l'intermédiaire dudit premier bus (121), dans lequel un deuxième bus d'interface périphérique série (105) est raccordé au premier bus d'interface périphérique série (121), dans lequel un premier des blocs (118) présente une fonction de réinitialisation permettant de redémarrer l'appareil de commande, dans lequel un deuxième des blocs (119) présente au moins un étage final d'allumage, dans lequel un troisième des blocs (120) exécute des fonctions de sécurité auxquelles appartiennent le dispositif de surveillance et le premier dispositif d'évaluation dudit au moins un signal d'accélération parallèlement à un deuxième dispositif d'évaluation d'un microcantrôleur (112), et dans lequel un quatrième des blocs (123) représente des fonctions d'interface du circuit intégré (100).

2. Circuit intégré selon la revendication 1, **caractérisé en ce que** le dispositif de surveillance (120) est réalisé de manière à présenter trois étages.

3. Circuit intégré selon l'une quelconque des revendications précédentes, **caractérisé en ce que** le circuit est configuré de manière à provoquer la charge d'une réserve d'énergie (122).
